# EUROPÄISCHE PATENTANMELDUNG

(11) **EP 4 401 360 A1**
(43) Veröffentlichungstag der Anmeldung: **17.07.2024**
(21) Anmeldenummer: 24151273.0
(22) Anmeldetag: 11.01.2024
(51) Int. Cl.: H04L 12/12, H04W 76/10

(54) **VERFAHREN ZUR INITIALISIERUNG EINER KOMMUNIKATIONSVERBINDUNG ZWISCHEN EINEM FELDGERÄT UND EINEM BEDIENGERÄT**

(30) Priorität: 12.01.2023 DE 102023100650
(71) Anmelder: Krohne S.A.S., 26103 Romans-sur-Isere Cedex (FR)
(72) Erfinder: Dubray, Olivier, 26300 Chatuzange-Le-Goubet (FR); Lambert, Denis, 26260 Saint Bardoux (FR); Chanal, Florian, 26240 Saint Barthelemy de Vals (FR); Marcel, Fabrice, 07130 Saint Péray (FR)
(74) Vertreter: Gesthuysen Patentanwälte

(57) **Zusammenfassung**

Dargestellt und beschrieben ist ein Verfahren zur Initialisierung einer Kommunikationsverbindung zwischen einem Feldgerät (1) und einem Bediengerät (2) gemäß einem Kommunikationsprotokoll, wobei das Kommunikationsprotokoll eine Bekanntmachungsnachricht (6) mit einem Datenbereich (7) definiert.

Aufgabe der vorliegenden Erfindung ist die Angabe eines Verfahrens zur Initialisierung einer Kommunikationsverbindung zwischen dem Feldgerät (1) und dem Bediengerät (2) gemäß dem Kommunikationsprotokoll, bei welchem Probleme bei der Initialisierung zumindest abgemildert sind.

Die Aufgabe ist durch ein Verfahren gelöst, welches wie folgt modifiziert ist: Vom Feldgerät (1) wird eine Bekanntmachungsnachricht (6) gemäß dem Kommunikationsprotokoll mit einem ersten Datum (8) im Datenbereich (7) erzeugt und gesendet. Das erste Datum (8) bestimmt, ob eine Kommunikationsverbindung möglich ist oder nicht.

Vom Bediengerät (2) wird die Bekanntmachungsnachricht (6) empfangen und dann, wenn das erste Datum (8) die Möglichkeit der Kommunikationsverbindung bestimmt, wird vom Bediengerät (2) die Kommunikationsverbindung initialisiert.

## Beschreibung

Die Erfindung betrifft ein Verfahren zur Initialisierung einer Kommunikationsverbindung zwischen einem Feldgerät und einem Bediengerät gemäß einem Kommunikationsprotokoll. Ein Aufbau der Kommunikationsverbindung nach einer Initialisierung der Kommunikationsverbindung und eine Kommunikation zwischen dem Feldgerät und dem Bediengerät erfolgen demnach gemäß dem Kommunikationsprotokoll. Das Kommunikationsprotokoll definiert eine Bekanntmachungsnachricht mit einem Datenbereich. Eine gemäß dem Kommunikationsprotokoll erzeugte Bekanntmachungsnachricht weist demnach einen Datenbereich auf. In dem Datenbereich einer Bekanntmachungsnachricht kann mindestens ein Datum abgespeichert werden.

Ein Feldgerät ist ein Gerät im Bereich der Automatisierungstechnik, welches mit einem Produktionsprozess in direkter Beziehung steht. Ein Feldgerät weist zum Beispiel einen Aktor und/oder einen Sensor auf. Für gewöhnlich ist ein Feldgerät mit einem Steuerungssystem über einen Feldbus verbunden.

Bevor eine Kommunikation zwischen dem Feldgerät und dem Bediengerät gemäß dem Kommunikationsprotokoll stattfinden kann, ist zunächst eine Initialisierung einer Kommunikationsverbindung erforderlich. Nach der Initialisierung erfolgt ein Aufbau der Kommunikationsverbindung, über welche die Kommunikation gemäß dem Kommunikationsprotokoll dann erfolgt. In der Praxis kommt es oftmals zu Problemen bei der Initialisierung der Kommunikationsverbindung.

Aufgabe der vorliegenden Erfindung ist daher die Angabe eines Verfahrens zur Initialisierung einer Kommunikationsverbindung zwischen dem Feldgerät und dem Bediengerät gemäß dem Kommunikationsprotokoll, bei welchem Probleme bei der Initialisierung zumindest abgemildert sind. Mit Abmilderung ist auch gemeint, dass Probleme auch mit einer geringeren Wahrscheinlichkeit eintreten.

Die Aufgabe ist durch ein Verfahren gemäß Anspruch 1 gelöst. Das erfindungsgemäße Verfahren ergänzt das zuvor beschriebene Verfahren dadurch, dass vom Feldgerät eine Bekanntmachungsnachricht gemäß dem Kommunikationsprotokoll mit einem ersten Datum im Datenbereich erzeugt und gesendet wird und das erste Datum bestimmt, ob eine Kommunikationsverbindung möglich ist oder nicht.

Weiter wird vom Bediengerät die Bekanntmachungsnachricht empfangen und wird dann, wenn das erste Datum die Möglichkeit der Kommunikationsverbindung bestimmt, vom Bediengerät die Kommunikationsverbindung initialisiert.

Das erste Datum ist demnach eine Information, die angibt, ob die Kommunikationsverbindung mit dem Feldgerät möglich ist oder nicht. Von dem Bediengerät wird die empfangene Bekanntmachungsnachricht und damit auch das erste Datum ausgewertet. Wenn das Ergebnis der Auswertung ist, dass das erste Datum die Kommunikationsverbindung bestimmt, also die Kommunikationsverbindung möglich ist, dann wird vom Bediengerät die Kommunikationsverbindung initialisiert. Auf die Initialisierung folgt für gewöhnlich der Aufbau der Kommunikationsverbindung. Wenn das erste Datum nicht die Möglichkeit der Kommunikationsverbindung bestimmt und das Bediengerät die Initialisierung der Kommunikationsverbindung trotzdem versucht, dann wird diese von dem Feldgerät verweigert.

Zwar findet die Initialisierung der Kommunikationsverbindung vorzugsweise nur noch dann statt, wenn diese möglich ist, jedoch ist das für einen Benutzer des Bediengeräts nicht ersichtlich. Deshalb ist in einer Ausgestaltung des Verfahrens vorgesehen, dass vom Bediengerät das erste Datum für einen Benutzer des Bediengeräts angezeigt wird. Dabei wird das Datum insbesondere in einem für den Benutzer, also einen Menschen, verständlichen Format angezeigt. Dadurch ist für den Benutzer nun ersichtlich, ob die Initialisierung möglich ist oder nicht.

In der Praxis ist oftmals die Initialisierung der Kommunikationsverbindung nicht sofort möglich. Um dieses Problem zu lösen, werden im Folgenden zwei zueinander alternative Ausgestaltungen vorgestellt.

In der ersten Alternative ist vorgesehen, dass vom Feldgerät eine Dauer bis zur Möglichkeit der Kommunikationsverbindung als erstes Datum bestimmt wird. Weiter wird vom Bediengerät dann die Kommunikationsverbindung nach Ablauf der Dauer initialisiert. Demnach ist die Dauer das erste Datum im Datenbereich der Bekanntmachungsnachricht. Diese Dauer wird vom Bediengerät derart verstanden, dass die Kommunikationsverbindung vom Bediengerät erst nach Ablauf dieser Dauer initialisiert wird. Die Dauer beginnt vorzugsweise ab dem Empfang der Bekanntmachungsnachricht durch das Bediengerät.

In der zweiten Alternative bestimmt das erste Datum die Möglichkeit der Kommunikationsverbindung. Weiter wird vom Feldgerät ein zweites Datum im Datenbereich der Bekanntmachungsnachricht erzeugt. Das zweite Datum bestimmt eine Dauer bis zur Möglichkeit der Kommunikationsverbindung. Vom Bediengerät wird dann die Kommunikationsverbindung nach Ablauf der Dauer initialisiert. Somit weist der Datenbereich der Bekanntmachungsnachricht das erste und das zweite Datum auf. Ansonsten gelten die Ausführungen zur ersten Alternative.

In der ersten Alternative wird das erste Datum vom Bediengerät derart interpretiert, dass die Kommunikationsverbindung möglich ist und dass die Initialisierung nach Ablauf der Dauer vollzogen werden kann. Das erste Datum enthält demnach zwei Information. In der zweiten Alternative haben das erste und das zweite Datum jeweils nur eine Information. Und zwar hat das erste Datum die Information, dass die Kommunikationsverbindung möglich ist, und hat das zweite Datum die Information, dass die Initialisierung der Kommunikationsverbindung nach Ablauf der Dauer vollzogen werden kann.

Diese beiden Alternativen können auf verschiedene Weisen weitergebildet werden.

In einer Weiterbildung der beiden Alternativen wird vom Feldgerät die Dauer um eine Wartezeit reduziert und nach der Wartezeit die Bekanntmachungsnachricht mit der reduzierten Dauer erneut gesendet wird. Die Wartezeit ist eine Zeit zwischen zwei aufeinander folgenden Sendevorgängen der Bekanntmachungsnachricht. Vorzugsweise wird vom Feldgerät die Bekanntmachungsnachricht mehrfach erneut gesendet und die Dauer jeweils um die Wartezeit reduziert wird. Auf diese Weise signalisiert das Feldgerät fortwährend die Möglichkeit der Kommunikationsverbindung und ist die Dauer nicht unnötig lang.

In einer anderen Weiterbildung wird vom Bediengerät die Dauer für den Benutzer des Bediengeräts angezeigt. Dadurch ist der Benutzer darüber informiert, wann die Initialisierung der Kommunikationsverbindung stattfinden wird.

In einer weiteren Ausgestaltung des Verfahrens wird von dem Bediengerät und dem Feldgerät die Kommunikationsverbindung nach der Initialisierung der Kommunikationsverbindung aufgebaut und gemäß dem Kommunikationsprotokoll kommuniziert.

Für gewöhnlich tritt der in der zuvor beschriebenen Ausgestaltung beschriebene Fall ein, dass die Kommunikationsverbindung nach der Initialisierung erfolgreich aufgebaut wird. Jedoch kann es auch vorkommen, dass die Kommunikationsverbindung nicht erfolgreich aufgebaut wird. Deshalb ist in einer weiteren Ausgestaltung des Verfahrens, wenn das Verfahren die zuvor beschriebene Dauer aufweist, vorgesehen, dass ein Aufbau der Kommunikationsverbindung erfolglos versucht und vom Feldgerät dann die Dauer um einen Betrag erhöht wird. In einer Weiterbildung dieser Ausgestaltung wird die Dauer für jeden erfolglosen Versuch des Aufbaus der Kommunikationsverbindung in einem Zeitintervall jeweils um den Betrag oder um einen anderen Betrag erhöht. Durch die Erhöhung wird die Sicherheit erhöht und ein Benutzer bemerkt an der sich erhöhenden Dauer, dass es ein Problem mit dem Aufbau der Kommunikationsverbindung gibt.

Die Kommunikationsverbindung kann entweder über Funk oder über ein Medium wie zum Beispiel elektrische Leiter erfolgen. In einer Ausgestaltung des Verfahrens ist dabei vorgesehen, dass vom Feldgerät und vom Bediengerät über Funk über die Kommunikationsverbindung miteinander gemäß dem Kommunikationsprotokoll kommuniziert wird. Dadurch entfällt das Medium und das Verbinden des Feldgeräts und des Bediengeräts mit dem Medium, was den Aufwand der Kommunikation reduziert.

Wenn die Kommunikationsverbindung über Funk erfolgt, dann ist vorzugsweise ein Bluetooth-Standard das Kommunikationsprotokoll. Also wird als das Kommunikationsprotokoll der Bluetooth-Standard umgesetzt.

Wenn das Kommunikationsprotokoll ein Bluetooth-Standard ist, dann ist vorzugsweise eine Advertising-Nachricht die Bekanntmachungsnachricht. Es wird also ein Bluetooth-Standard verwendet, der eine Advertising-Nachricht definiert. Advertising-Nachrichten dienen gemäß dem Bluetooth-Standard anderen Zwecken als den hier im Zusammenhang mit dem Verfahren beschriebenen Zweck.

In einer weiteren Ausgestaltung wird das erste Datum in einem Bit eines Bytes im Datenbereich abgespeichert. Eine solche Advertising-Nachricht weist auch einen Datenbereich auf. Dieser Datenbereich nimmt dann das erste und gegebenenfalls auch das zweite Datum auf. Die Speicherung des ersten Datums in nur einem Bit ist ausgesprochen sparsam in Bezug auf einen in einer Advertising-Nachricht zur Verfügung stehenden Speicherplatz. Wenn der Datenbereich ein zweites Datum aufweist, dann wird vorzugsweise auch das zweite Datum in mindestens einem der übrigen Bits des Bytes abgespeichert. Somit stehen bis zu 7 Bit zur Speicherung der Dauer zur Verfügung. Falls die 7 Bit in dem Byte nicht ausreichend zur Speicherung der Dauer sein sollten, dann wir ein weiteres Byte im Datenbereich zusätzlich verwendet.

Aus der Praxis ist bekannt, dass eine unberechtigte Authentifizierung vom Bediengerät am Feldgerät versucht wird, zum Beispiel durch einen unbefugten Benutzer. In einer Ausgestaltung ist vorgesehen, dass dann die Authentifizierung vom Feldgerät abgelehnt und die Kommunikationsverbindung zwischen dem Bediengerät und dem Feldgerät getrennt wird. Durch die Trennung der Verbindung wird die Sicherheit des Feldgeräts vor Manipulationen verbessert.

Die Authentifizierung wird zum Beispiel zur Erweiterung von Rechten auf dem Feldgerät oder im Zusammenhang mit der Kommunikationsverbindung ausgeführt.

Vorzugsweise wird die Authentifizierung mit einer PIN oder einem Passwort oder einem Fingerabdruck ausgeführt.

In einer weiteren Ausgestaltung ist das Bediengerät ein Smartphone. Die Funktionalität des Bediengeräts wird auf dem Smartphone durch eine Anwendung realisiert.

In einer weiteren Ausgestaltung ist das Feldgerät ein Durchflussmessgerät, ein Füllstandsmessgerät, ein Füllstandsschalter, ein Temperaturmessgerät oder ein Druckmessgerät. Wenn das Feldgerät ein Durchflussmessgerät ist, dann ist es vorzugsweise ein magnetisch-induktives Durchflussmessgerät, ein Coriolis-Massedurchflussmessgerät oder ein Ultraschall-Durchflussmessgerät. Wenn das Feldgerät ein Füllstandsmessgerät ist, dann ist es vorzugsweise ein Radar-Füllstandsmessgerät oder ein Ultraschall-Füllstandsmessgerät. Wenn das Feldgerät ein Füllstandsschalter ist, dann ist es vorzugsweise ein Vibrationsfüllstandsschalter oder ein kapazitiver Füllstandsschalter.

Im Einzelnen ist eine Vielzahl von Möglichkeiten gegeben, das Verfahren zur Kommunikation zwischen dem Feldgerät und dem Bediengerät gemäß dem Kommunikationsprotokoll auszugestalten und weiterzubilden. Dazu wird verwiesen sowohl auf die dem unabhängigen Anspruch nachgeordneten Ansprüche als auch auf die nachfolgende Beschreibung eines bevorzugten Ausführungsbeispiels in Verbindung mit der Zeichnung. In der Zeichnung zeigt
- Figur 1: ein Ausführungsbeispiel eines Feldgeräts und eines Bediengeräts,
- Figur 2: ein Ausführungsbeispiel einer Bekanntmachungsnachricht und

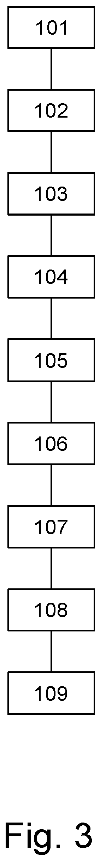

- Figur 3: ein Ausführungsbeispiel eines Ablaufplans.

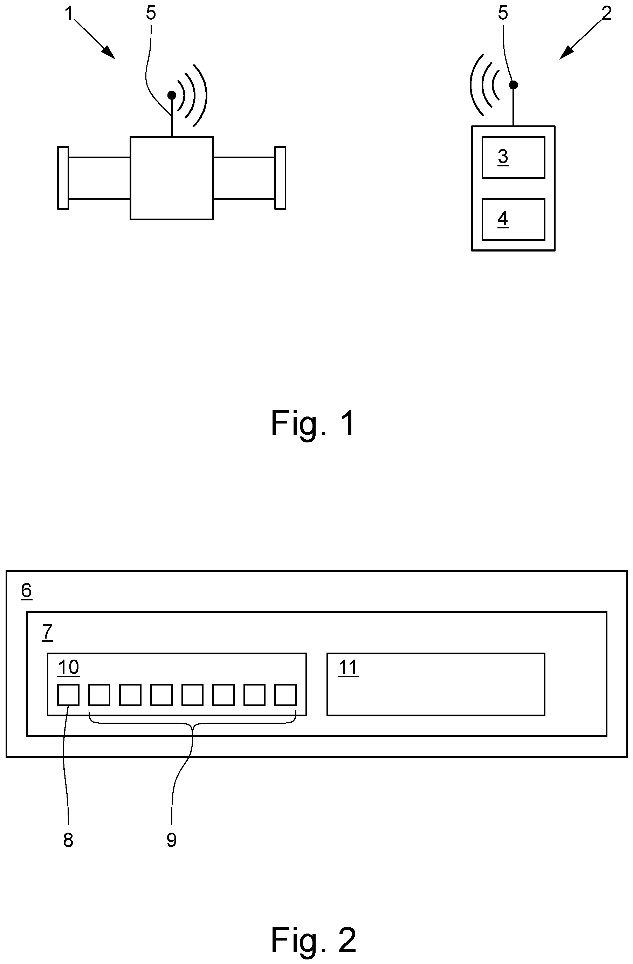

Figur 1 zeigt ein Feldgerät 1 und ein Bediengerät 2, welche zur Kommunikation zwischen einander gemäß einem Kommunikationsprotokoll ausgebildet sind. In diesem Ausführungsbeispiel ist das Feldgerät 1 ein magnetisch-induktives Durchflussmessgerät und das Bediengerät 2 ein Smartphone mit einer Anzeige 3 und einer Tastatur 4. Das im weiteren Verlauf beschriebene Verfahren wird in Bezug auf das Smartphone durch eine Anwendung umgesetzt. Das Feldgerät 1 und das Bediengerät sind zur Kommunikation über Funk ausgebildet. Dazu weisen sie insbesondere auch jeweils eine Antenne 5 auf.

Figur 2 zeigt eine Bekanntmachungsnachricht 6 mit einem Datenbereich 7, welche durch das Kommunikationsprotokoll definiert ist.

Im Folgenden sind das Feldgerät 1 und das Bediengerät 2 im Betrieb und führen das folgende Verfahren aus.

In einem ersten Verfahrensschritt 101 wird vom Feldgerät 1 eine Bekanntmachungsnachricht 6 gemäß dem Kommunikationsprotokoll mit einem ersten Datum 8 und einem zweiten Datum 9 im Datenbereich 7 der Bekanntmachungsnachricht 6 erzeugt und gesendet. Das erste Datum 8 bestimmt, ob eine Kommunikationsverbindung zwischen dem Feldgerät 1 und dem Bediengerät 2 möglich ist oder nicht. Das zweite Datum 9 bestimmt eine Dauer bis zur Möglichkeit der Kommunikationsverbindung. Hier ist die Kommunikationsverbindung möglich und die Dauer beträgt 10 s. Im vorliegenden Ausführungsbeispiel weist der Datenbereich 7 zwei Byte, also ein erstes Byte 10 und ein zweites Byte 11 zum Speichern von Informationen auf. Der Datenbereich einer Bekanntmachungsnachricht kann auch mehr als zwei Byte aufweisen. Das erste Datum 8 und das zweite Datum 9 sind vom Feldgerät 1 im ersten Byte 10 im Datenbereich 7 angeordnet. Und zwar ist das erste Datum 8 im niedrigstwertigen Bit und ist das zweite Datum in den sieben übrigen Bit des ersten Bytes 10 abgespeichert.

In einem zweiten Verfahrensschritt 102 wird vom Bediengerät 2 die Bekanntmachungsnachricht 6 empfangen und ausgewertet. Dann, wenn die Auswertung ergibt, dass das erste Datum 8 die Möglichkeit der Kommunikationsverbindung bestimmt, wird vom Bediengerät 2 die Kommunikationsverbindung nach dem Ablauf der Dauer initialisiert und von dem Bediengerät 2 und dem Feldgerät 1 die Kommunikationsverbindung aufgebaut und dann gemäß dem Kommunikationsprotokoll kommuniziert. Im vorliegenden Ausführungsbeispiel ergibt die Auswertung, dass die Kommunikationsverbindung möglich ist, und zwar nach einer Dauer von 10 s nach dem Empfang der Bekanntmachungsnachricht 6. Vor Ablauf der Dauer würde die Initialisierung der Kommunikationsverbindung vom Feldgerät 1 verweigert werden.

Dementsprechend wird in einem dritten Verfahrensschritt 103 vom Bediengerät 2 die Kommunikationsverbindung initialisiert, in einem vierten Verfahrensschritt 104 vom Bediengerät 2 und vom Feldgerät 1 die Kommunikationsverbindung aufgebaut und in einem fünften Verfahrensschritt 105 gemäß dem Kommunikationsprotokoll über die aufgebaute Kommunikationsverbindung kommuniziert.

Die Möglichkeit der Kommunikationsverbindung, also das erste Datum, und die Dauer, also das zweite Datum, werden auch vom Bediengerät 2 auf der Anzeige 3 für einen Benutzer im zweiten Verfahrensschritt 102 verständlich angezeigt.

Vom Feldgerät 1 und vom Bediengerät 2 wird über Funk, also insbesondere unter Verwendung der Antennen 5, über die Kommunikationsverbindung miteinander gemäß dem Kommunikationsprotokoll kommuniziert. Über die Kommunikationsverbindung werden beliebige Informationen ausgetauscht. Zum Beispiel wird in einem sechsten Verfahrensschritt 106 vom Bediengerät 2 über die Kommunikationsverbindung eine Messung des Feldgeräts 1 gestartet, welches bekanntlich in diesem Ausführungsbeispiel ein magnetisch-induktives Durchflussmessgerät ist. Weiter wird in einem siebten Verfahrensschritt 107 über die Kommunikationsverbindung ein Messwert der Messung vom Feldgerät 1 zum Bediengerät 2 übertragen und auf der Anzeige 3 für den Benutzer verständlich angezeigt.

In einem anderen Beispiel wird im sechsten Verfahrensschritt 106 vom Bediengerät 2 über die Kommunikationsverbindung eine Konfiguration des Feldgeräts 1 geändert oder ein Zustand des Feldgeräts 1 überwacht. Der siebte Verfahrensschritt 107 entfällt in diesem Beispiel.

Das Kommunikationsprotokoll ist ein Bluetooth-Standard, und zwar einer, der eine Advertising-Nachricht definiert. In diesem Ausführungsbeispiel wird die Advertising-Nachricht als Bekanntmachungsnachricht verwendet.

Im weiteren Verlauf des Betriebs versucht der Benutzer in einem achten Verfahrensschritt 108 eine Authentifizierung vom Bediengerät 2 am Feldgerät 1. Dieses versucht er durch die Eingabe eines Passworts in die Tastatur 4 am Bediengerät 2. Die Authentifizierung würde zur Erweiterung von Rechten des Benutzers auf dem Feldgerät 2 führen. Da das Passwort jedoch nicht richtig ist, wird die Authentifizierung vom Feldgerät 1 in einem neunten Verfahrensschritt 109 abgelehnt und die Kommunikationsverbindung zwischen dem Bediengerät 2 und dem Feldgerät 1 getrennt.

### Bezugszeichen

- 1: Feldgerät
- 2: Bediengerät
- 3: Anzeige
- 4: Tastatur
- 5: Antenne
- 6: Bekanntmachungsnachricht
- 7: Datenbereich
- 8: erstes Datum
- 9: zweites Datum
- 10: erstes Byte
- 11: zweites Byte

## Patentansprüche

1. Verfahren zur Initialisierung einer Kommunikationsverbindung zwischen einem Feldgerät (1) und einem Bediengerät (2) gemäß einem Kommunikationsprotokoll,
wobei das Kommunikationsprotokoll eine Bekanntmachungsnachricht (6) mit einem Datenbereich (7) definiert,
wobei vom Feldgerät (1) eine Bekanntmachungsnachricht (6) gemäß dem Kommunikationsprotokoll mit einem ersten Datum (8) im Datenbereich (7) erzeugt und gesendet wird und das erste Datum (8) bestimmt, ob eine Kommunikationsverbindung möglich ist oder nicht und
wobei vom Bediengerät (2) die Bekanntmachungsnachricht (6) empfangen wird und dann, wenn das erste Datum (8) die Möglichkeit der Kommunikationsverbindung bestimmt, vom Bediengerät (2) die Kommunikationsverbindung initialisiert wird.

2. Verfahren nach Anspruch 1, wobei vom Bediengerät (2) das erste Datum (8) für einen Benutzer des Bediengeräts (2) angezeigt wird.

3. Verfahren nach Anspruch 1 oder 2, wobei vom Feldgerät (1) eine Dauer bis zur Möglichkeit der Kommunikationsverbindung als das erste Datum (8) bestimmt wird und wobei vom Bediengerät (2) die Kommunikationsverbindung nach Ablauf der Dauer initialisiert wird.

4. Verfahren nach Anspruch 1 oder 2, wobei das erste Datum (8) die Möglichkeit der Kommunikationsverbindung bestimmt und vom Feldgerät (1) ein zweites Datum (9) im Datenbereich (7) erzeugt wird und das zweite Datum (9) eine Dauer bis zur Möglichkeit der Kommunikationsverbindung bestimmt und wobei vom Bediengerät (2) die Kommunikationsverbindung nach Ablauf der Dauer initialisiert wird.

5. Verfahren nach Anspruch 3 oder 4, wobei vom Feldgerät (1) die Dauer um eine Wartezeit reduziert und nach einem Verstreichen der Wartezeit die Bekanntmachungsnachricht (6) mit der reduzierten Dauer erneut gesendet wird.

6. Verfahren nach Anspruch 5, wobei vom Feldgerät (1) die Bekanntmachungsnachricht (6) mehrfach erneut gesendet und die Dauer jeweils um die Wartezeit reduziert wird.

7. Verfahren nach einem der Ansprüche 3 bis 6, wobei vom Bediengerät (2) die Dauer für einen Benutzer des Bediengeräts (2) angezeigt wird.

8. Verfahren nach einem der Ansprüche 1 bis 7, wobei von dem Bediengerät (2) und dem Feldgerät (1) die Kommunikationsverbindung nach der Initialisierung der Kommunikationsverbindung aufgebaut und gemäß dem Kommunikationsprotokoll kommuniziert wird.

9. Verfahren nach einem der Ansprüche 3 bis 7, wobei ein Aufbau der Kommunikationsverbindung erfolglos versucht wird und wobei vom Feldgerät (1) die Dauer um einen Betrag erhöht wird.

10. Verfahren nach Anspruch 9, wobei die Dauer für jeden erfolglosen Versuch des Aufbaus der Kommunikationsverbindung in einem Zeitintervall jeweils um den Betrag oder um einen anderen Betrag erhöht wird.

11. Verfahren nach einem der Ansprüche 1 bis 10, wobei vom Feldgerät (1) und vom Bediengerät (2) über Funk über die Kommunikationsverbindung miteinander gemäß dem Kommunikationsprotokoll kommuniziert wird.

12. Verfahren nach Anspruch 11, wobei das Kommunikationsprotokoll ein Bluetooth-Standard ist.

13. Verfahren nach Anspruch 12, wobei die Bekanntmachungsnachricht (6) eine Advertising-Nachricht ist.

14. Verfahren nach einem der Ansprüche 1 bis 13, wobei das erste Datum (8) in einem Bit eines Bytes (10) in der Bekanntmachungsnachricht (6) abgespeichert wird.

15. Verfahren nach den Ansprüchen 4 und 14, wobei das zweite Datum (9) in mindestens einem der übrigen Bits des Bytes (10) abgespeichert wird.

16. Verfahren nach einem der Ansprüche 1 bis 15, wobei eine unberechtigte Authentifizierung vom Bediengerät (2) am Feldgerät (1) versucht wird und wobei die Authentifizierung vom Feldgerät (1) abgelehnt und eine bestehende Kommunikationsverbindung zwischen dem Bediengerät (2) und dem Feldgerät (1) getrennt wird.

17. Verfahren nach Anspruch 16, wobei die Authentifizierung zur Erweiterung von Rechten auf dem Feldgerät (1) oder im Zusammenhang mit der Kommunikationsverbindung ausgeführt wird.

18. Verfahren nach Anspruch 16 oder 17, wobei die Authentifizierung mit einer PIN oder einem Passwort ausgeführt wird.

19. Verfahren nach einem der Ansprüche 1 bis 18, wobei das Bediengerät (2) ein Smartphone ist.

20. Verfahren nach einem der Ansprüche 1 bis 19, wobei das Feldgerät (1) ein Durchflussmessgerät, vorzugsweise ein magnetisch-induktives Durchflussmessgerät, ein Coriolis-Massedurchflussmessgerät, ein Ultraschall-Durchflussmessgerät, oder ein Füllstandsmessgerät, vorzugsweise ein Radar-Füllstandsmessgerät, ein Ultraschall-Füllstandsmessgerät, oder ein Füllstandsschalter, vorzugsweise ein Vibrationsfüllstandsschalter, ein kapazitiver Füllstandsschalter, oder ein Temperaturmessgerät oder ein Druckmessgerät ist.
